# EUROPÄISCHE PATENTSCHRIFT

(11) **EP 1 458 467 B1**
(45) Veröffentlichungstag und Bekanntmachung des Hinweises auf die Patenterteilung: **28.05.2008**
(21) Anmeldenummer: 02805771.9
(22) Anmeldetag: 20.12.2002
(51) Int. Cl.: B01F 13/00, B05C 17/005, A61C 9/00, B01F 15/02

(54) **VORRICHTUNG ZUM VERMISCHEN ZWEIER PASTÖSER MASSEN, INSBESONDERE ZUM VERMISCHEN EINER DENTAL-ABFORMMASSE MIT EINER KATALYSATORMASSE**
DEVICE FOR MIXING TWO PASTY MATERIALS, IN PARTICULAR FOR MIXING A DENTAL IMPRESSION MATERIAL WITH A CATALYST MATERIAL
DISPOSITIF POUR MELANGER DEUX MATIERES PATEUSES, NOTAMMENT POUR MELANGER UNE MATIERE POUR EMPREINTE DENTAIRE AVEC UNE MATIERE CATALYTIQUE

(30) Priorität: 28.12.2001 DE 10164385
(43) Veröffentlichungstag der Anmeldung: 22.09.2004
(73) Patentinhaber: Kettenbach GmbH & CO. KG, 35713 Eschenburg (DE)
(72) Erfinder: BUBLEWITZ, Alexander, 35745 Herborn (DE); SUCHAN, Matthias, 57627 Hachenburg (DE)
(74) Vertreter: KEIL & SCHAAFHAUSEN Patentanwälte
(86) Internationale Anmeldenummer: PCT/EP2002/014641
(87) Internationale Veröffentlichungsnummer: WO 2003/055582

(56) Entgegenhaltungen:
- EP-A- 0 885 651
- DE-C- 4 235 736
- DE-U- 29 818 499
- US-A- 4 871 090
- US-A- 5 498 078
- US-A- 6 129 244
- US-B1- 6 244 740

## Beschreibung

Die Erfindung betrifft eine Vorrichtung zum Vermischen zweier pastöser Massen, bei denen es sich insbesondere um eine Dental-Abformmasse und eine Katalysatormasse zur Beschleunigung der Polymerisation der Dental-Abformmasse handelt, wobei die Vorrichtung mit einem Gehäuse, das einen Mischerraum mit mindestens zwei Einlassöffnungen für die beiden pastösen Massen und einer Auslassöffnung für die vermischten pastösen Massen aufweist, und einem Mischerelement versehen ist, das insbesondere antreibbar in dem Mischerraum angeordnet und in dem Gehäuse um seine Längsachse drehbar gelagert ist, wobei das Gehäuse einen dem Mischerraum vorgelagerten Ankopplungsabschnitt mit zwei Ankopplungsöffnungen zum Verbinden mit zwei Ausgabeöffnungen einer Vorrichtung zum Ausgeben der beiden pastösen Massen aufweist, wobei sich an die Ankopplungsöffnungen durch den Ankopplungsabschnitt bis zu den Einlassöffnungen des Mischerraums erstreckende erste und zweite Kanäle anschließen und wobei die beiden Kanäle derart ausgebildet sind, dass für den ersten Kanal die Dauer, die die pastöse Masse vom Eintritt in die Ankopplungsöffnung des Ankopplungsabschnitts bis zum Eintritt in die Einlassöffnung des Mischerraums des Gehäuses benötigt, größer ist als im zweiten Kanal.

Die erfindungsgemäße Vorrichtung wird auf die beiden Auslassstutzen einer Austragvorrichtung aufgesteckt, mittels derer durch Aufbringen von Druck auf die pastösen Massen diese in die Mischvorrichtung eingebracht und nach dem Vermischen in der Mischvorrichtung aus dieser als Gemisch ausgegeben werden.

In einer Vielzahl von technischen Anwendungsgebieten ist es erforderlich, zwei getrennt gelagerte pastöse Massen in vermischter Form zu applizieren. Hierbei bedient man sich entweder dynamischer oder statischer Durchlaufmischer: d.h. Mischer mit bewegbarem oder feststehendem Mischerelement, die die Massen während des Durchströmens eines Mischergehäuses miteinander vermischen.

Ein dynamischer Mischer ist aus EP-A-0 492 412 bekannt. Diese bekannte Vorrichtung weist ein im Wesentlichen rohrförmiges Mischergehäuse mit einem darin drehbar angeordneten Mischerelement auf. Das Mischerelement weist eine Vielzahl von radial abstehenden stegförmigen Mischerarmen auf, die dann, wenn das Mischerelement angetrieben wird, für eine Umlenkung der Massenströme sorgt und damit die beiden pastösen Massen miteinander vermischt. Die pastösen Massen gelangen über eine radiale Stirnwand am hinteren Ende des Mischergehäuses in dieses hinein. Die Stirnwand weist zu diesem Zweck zwei Einlassstutzen auf, die auf die Auslassstutzen einer Vorrichtung zum Ausbringen der pastösen Massen aufgesteckt werden.

Wie sich herausgestellt hat, tritt in der Anfangsphase nach der Betätigung der Auftragvorrichtung, auf die der Mischer aufgesetzt wird, von einer oder beiden Komponenten eine größere Menge pro Zeiteinheit aus, als im weiteren Verlauf nach Betätigung der Auftragvorrichtung. Diese Über- bzw. Unterdosierung einer der beiden Komponenten resultiert in einem nicht vorschriftsmäßigen Mischungsverhältnis der beiden aus dem Mischer austretenden Komponenten. Diese Problematik ist unabhängig davon gegeben, ob der Mischer ein dynamisches oder statisches Mischerelement aufweist.

Es ist bereits bekannt, dem Problem konstruktiv dadurch zu begegnen, dass die zur Überdosierung neigende (Basis-) Komponente bzw. neigenden Komponenten innerhalb des Mischers bis zum Mischerelement und/oder zwischen Vorratsbehältnis und Mischer einen längeren Weg zurücklegen muss bzw. müssen als die andere (oder Katalysator-) Komponente (anderen Komponenten). Ein erstes Beispiel für ein gattungsgemäßes Konzept ist in DE-U-298 18 499 beschrieben, wonach der Kanal der einen Komponente zwischen dem Einlass eines dynamischen Mischers bis zum eigentlichen Mischerraum bogenförmig um die Längsachse des rotierbaren Mischerelements verläuft. Ein Beispiel für die Problemlösung im Falle eines statischen Mischers ist in EP-A-0 885 651 angegeben, wobei Mischer nach dem Gegenstand dieser Druckschrift bereits vor dem Anmeldetag des Gegenstands der DE-U-298 18 499 im Handel waren und frei an Dritte vertrieben sowie ausgegeben wurden. Auch bei diesen bekannten statischen Mischern wurde die zur Überdosierung neigende (Basis-) Komponente bogenförmig im Mischer umgeleitet und der Massenstrom zweigeteilt, um neben dem Massenstrom der anderen (oder Katalysator-) Komponente zum feststehenden Mischerelement zu gelangen. Die Einleitung der nicht voreilenden (Katalysator-) Komponente verläuft dabei möglichst direkt, d.h. ohne den Strömungswiderstand erhöhende Umleitungen. Weitere Beispiele für derartige Mischer mit der Verzögerung des Voranschreitens der Massenfront dienende Totvolumina sind aus EP-A-0 584 428 und EP-A 0 664 153 bekannt.

Bei den bekannten Mischern kann nach Beendigung des Ausbringvorgangs, d.h. bei abgeschalteter Auftragvorrichtung, eine Rückkontamination auftreten, da durch den ggf. unterschiedlichen Druck in den Vorratsbehältnissen der pastösen Massen bspw. die (Basis-) Komponente in den Behälter der (Katalysator-) Komponente strömt. Wenn die so miteinander gemischten Komponenten in dem Ausbringkanal von einem der Vorratsbehältnisse der pastösen Massen polymerisieren, d.h. aushärten, wird das gesamte Vorratsbehältnis und sein Inhalt unbrauchbar.

Der Erfindung liegt die Aufgabe zu Grunde, eine weitere Vorrichtung der eingangs genannten Art zum Vermischen zweier pastöser Massen zu schaffen, deren Mischungsverhältnis von Beginn der Abgabe der vermischten Massen ab konstant ist und bei der eine Rückkontamination weitgehend unterbunden wird.

Zur Lösung dieser Aufgabe wird vorgeschlagen, dass die beiden Kanäle derart ausgebildet sind, dass zumindest der erste Kanal einen sich von der Ankopplungsöffnung aus in axialer Richtung des Mischerelements erstreckenden ersten Teilabschnitt, einen sich an diesen anschließenden Umlenkungsabschnitt und einen zur zugehörigen Einlassöffnung führenden zweiten Teilabschnitt aufweist, wobei die Achsen des ersten und des zweiten Teilabschnitts in einer gemeinsamen Ebene mit der Längsachse des Mischerelements liegen.

Alternativ oder zusätzlich hierzu ist es erfindungsgemäß vorgesehen, dass bei einer Vorrichtung der eingangs genannten Art die beiden Kanäle derart ausgebildet sind, dass zumindest der erste Kanal einen sich von der Ankopplungsöffnung aus bogenförmig um die Achse des Mischerelements erstreckenden ersten Teilabschnitt, einen in axialer Richtung des Mischerelements zu dem ersten Teilabschnitt versetzten und zur zugehörigen Einlassöffnung führenden zweiten Teilabschnitt und einen den ersten und den zweiten Teilabschnitt verbindenden Umlenkungsabschnitt aufweist, der von der Ankopplungsöffnung weiter entfernt angeordnet ist als die Einlassöffnung.

Sinngemäß ist nach diesen Ausführungsform der Erfindung vorgesehen, dass das kurzzeitige anfängliche Überschreiten der vorgesehenen Dosierung (nachfolgend Überdosierung genannt) einer der beiden Komponenten bzw. Massen durch eine entsprechende Ausgestaltung des Kanals, durch den diese Masse bis zum Erreichen des Mischerelements strömt, kompensiert wird. Diese Kompensation erfolgt in der Gestalt, dass die Wege und damit auch die Verweildauern, die die pastösen Massen vom Eintritt in die Ankopplungsöffnungen des Ankopplungsabschnitts des Mischergehäuses bis zum Eintritt in die Einlassöffnungen des rohrförmigen Abschnitts des Mischergehäuses benötigen, unterschiedlich sind. Durch Untersuchungen der Überdosierungsmenge und ggf. der Strömungsgeschwindigkeiten der beiden zu vermischenden Komponenten kann ermittelt werden, in welcher Art und Weise einer der beiden oder beide Kanäle ausgebildet sein muss bzw. müssen (Querschnittsveränderung bzw. Form und Größe sowie Längenveränderung des Kanals/der Kanäle), damit trotz Überdosierung beide Komponenten zeitgleich in die Einlassöffnungen des rohrförmigen Abschnitts des Mischergehäuses gelangen.

Darüber hinaus wird die der Erfindung zugrundeliegende Aufgabe dadurch gelöst, dass der zweite Kanal einen den Weg zwischen der Ankopplungsöffnung und der zugehörigen Einlassöffnung verlängernden Verlängerungsabschnitt aufweist. Dieser Verlängerungsabschnitt verläuft dabei entweder zumindest bereichsweise bogenförmig um die Längsachse des Mischerelements oder der Verlängerungsabschnitt weist einen sich von der Ankopplungsöffnung aus in axialer Richtung des Mischerelements erstreckenden ersten Teilabschnitt, einen sich an diesen anschließenden Umlenkungsabschnitt und einen zur zugehörigen Einlassöffnung führenden zweiten Teilabschnitt auf, wobei die Achsen des ersten und des zweiten Teilabschnitts in einer gemeinsamen Ebene mit der Längsachse des Mischerelements liegen. Bei der bogenförmig um die Längsachse des Mischerelements verlaufenden Ausbildung des zweiten Kanals kann sich der Verlängerungsabschnitt z.B. um 90° oder 45° um die Längsachse des Mischerelements erstrecken. Es wurde jedoch herausgefunden, dass sogar bei einer bogenförmigen Umlenkung um nur etwa 5° schon das Auftreten von Rückkontaminationen vermieden werden konnte. Durch die Umlenkung der pastösen Masse in dem zweiten Kanal wird der Eintritt der (Katalysator-) Komponente in den Mischerraum verzögert. Um eine Unterdosierung der (Katalysator-) Komponente in der Anfangsphase zu verhindern, wird dies durch die Verlängerung der Dauer bzw. des Weges in dem ersten Kanal, den die pastöse (Basis-) Masse vom Eintritt in die Ankopplungsöffnung des Ankopplungsabschnitts bis zum Eintritt in die Einlassöffnung des Mischerraums des Gehäuses benötigt, kompensiert. Die Umlenkung in dem zweiten Kanal erhöht gleichzeitig den Strömungswiderstand in dem zweiten Kanal derart, dass nach Beendigung des Ausbringvorgangs, d.h. bei abgeschalteter Auftragvorrichtung, eine Rückkontamination durch in den zweiten Kanal einströmende (Basis-) Masse aus dem ersten Kanal unterbunden wird. Eine Vermischung und ein Aushärten (Polymerisieren) der beiden Komponenten in dem stromaufwärts der Ankopplungsöffnungen gelegenen Bereich, d.h. in der Vorrichtung zum Ausgeben der beiden pastösen Massen, kann folglich nicht auftreten.

Die erfindungsgemäße Lösung der Kompensation der Überdosierung des einen Massenstroms besteht darin, den diesem Massestrom zugeordneten (ersten) Kanal länger als den anderen (zweiten) Kanal auszubilden, indem sich der betreffende Kanal von der Einlassöffnung des Ankoppelabschnitts des Mischergehäuses aus zunächst in axialer Richtung des Mischerelements bzw. bogenförmig um die Achse des Mischerelements erstreckt, dann eine Umlenkung um vorzugsweise 180° erfährt und sich im Anschluss daran wiederum im Wesentlichen in axialer Richtung des Mischerelements bzw. bogenförmig um die Achse des Mischerelements erstreckt, um nach einer erneuten Umlenkung um z.B. 90° bis 180° in der Einlassöffnung des Mischerraums zu enden. Diese Kanalausbildung ist platzsparend bei tolerierbarem Strömungswiderstand. Gleichzeitig haben diese Gestaltungen des Kanals zur Folge, dass die Einlassöffnung des Mischerraums nahe an der Ankopplungsöffnung liegt. Bei z.B. um 180° zueinander versetzt angeordneten Ankopplungsöffnungen liegen auch die Einiassöffnungen weit voneinander entfernt, so dass das Auftreten von Rückkontaminationen verhindert wird. Darüber hinaus kann durch diese Kanalausbildung der erhöhte Strömungswiderstand in dem anderen (zweiten) Kanal kompensiert werden, falls dort zur weiteren Vermeidung einer Rückkontamination ein Verlängerungsabschnitt vorgesehen ist.

Der erfindungsgemäß ausgebildete Kanal kann auch in zwei oder mehreren jeweils im Wesentlichen parallel bzw. (insbesondere bezüglich ihres Verlaufs) gleich ausgestalteten Teilkanäle aufgeteilt sein. Mit anderen Worten weist der Ankopplungsabschnitt des Gehäuses des erfindungsgemäßen Mischers unterschiedlich lange zu den Eintrittsöffnungen des rohrförmigen Gehäuseabschnitts führende Kanäle auf. Alternativ oder zusätzlich dazu können die beiden Kanäle unterschiedliche große Totvolumina aufweisen, die strömungstechnisch derart angeordnet sind, dass erst nach Ausfüllung des betreffenden Totvolumens die Masse weiter in Richtung der den betreffenden Kanal zugeordneten Einlassöffnung strömt. Statt beide Kanäle mit einem Totvolumen zu versehen, ist es auch möglich, lediglich einen der beiden Kanäle mit einem Totvolumen auszubilden.

In der Praxis haben sich Mischer bewährt, die auf zwei im Abstand zueinander angeordnete Auslassstutzen einer Austragvorrichtung aufgesteckt werden. Das Mischergehäuse weist somit in seinem Ankopplungsabschnitt zwei Ankopplungsöffnungen auf, die axial zum Mischerelement verschoben und diametral gegenüberliegend angeordnet sind. Die Einlassöffnungen des rohrförmigen Abschnitts des Mischergehäuses liegen bei den bekannten Mischern im Regelfall ebenfalls diametral gegenüber. Somit ergeben sich bei den bekannten Mischerkonstruktionen kurze Kanäle zwischen den Ankopplungsöffnungen und den diesen zugeordneten Einlassöffnungen. Damit man bei einem derartigen Mischerkonzept unterschiedlich lange Kanäle ausbilden kann, erfolgt die erfindungsgemäße Umlenkung zumindest der einen (oder Basis-) Masse entlang von Teilabschnitten des ersten Kanals, deren Achsen in einer gemeinsamen Ebene mit der Achse des Mischerelements liegen bzw. bogenförmig um die Längsachse führen.

Die Anordnung der Teilabschnitte des ersten Kanals dergestalt, dass die Längsachsen der Teilabschnitte zusammen mit der Längsachse des Mischerelements eine gemeinsame Radialebene aufspannen, hat den Vorteil der platzsparenden Ausbildung des längeren ersten Kanals. Vorzugsweise sind die Teilabschnitte des ersten Kanals geradlinig ausgebildet; alternativ ist es auch möglich, dass sie krummlinig bzw. gekrümmt ausgebildet sind, wobei allerdings weiterhin gilt, dass ihre in diesem Fall gekrümmten Längsachsen wiederum in einer gemeinsamen radialen Ebene zusammen mit der (geraden) Längsachse des Mischerelements angeordnet sind.

Im oben beschriebenen Fall, in dem die Teilabschnitte des ersten Kanals geradlinig ausgebildet sind, ist es ferner von Vorteil, wenn sie parallel zueinander verlaufen. Der Umlenkungsabschnitts ist in diesem Fall U-förmig ausgebildet oder, allgemeiner ausgedrückt, er erstreckt sich über 180°.

Wenn die Teilabschnitte des ersten Kanals sich bogenförmig um die Längsachse des Mischerelements erstrecken, d.h. in axialer Richtung übereinanderliegend ausgebildet sind, ist der Umlenkungsabschnitts C-förmig ausgebildet oder, allgemeiner ausgedrückt, er erstreckt sich ebenfalls über 180°. Der Massenstrom wird dabei zunächst in dem ersten Teilabschnitt bogenförmig von der Ankopplungsöffnung weggeführt und nach der Umlenkung in Richtung auf die vorzugsweise nahe bei der Ankopplungsöffnung gelegene Einlassöffnung zurückgeleitet. Auch diese Ausbildung des ersten Kanals ist besonders platzsparend.

Die Einlassöffnungen der beiden Kanäle in den Mischerraum können in axialer Richtung des Mischerelements oder radial auf dieses zu weisen. Je nach Ausgestaltung der Ausrichtung der Einlassöffnungen kann sich an den zweiten Teilabschnitt noch ein weiterer Umlenkungsabschnitt anschließen. Bei paralleler Ausrichtung der beiden Teilabschnitte des ersten Kanals erstreckt sich dieser weitere Umlenkabschnitt um 90°, wenn die Einlassöffnungen radial in den Mischerraum einmünden, und über insgesamt 180°, wenn die Einlassöffnungen axial in den Mischerraum einmünden.

In vorteilhafter Weiterbildung der Erfindung ist vorgesehen, dass das Mischerelement in Höhe der Einlassöffnungen mindestens ein Umlenkelement zur Unterstützung des Transports der durch die Einlassöffnungen in den rohrförmigen Abschnitt des Gehäuses gelangenden pastösen Massen in axialer Richtung aufweist, wobei das mindestens eine Umlenkelement eine sich um die Achse erstreckende und schräg zu einer Radialebene der Achse verlaufende Umlenkfläche aufweist.

Bei dieser Weiterbildung der erfindungsgemäßen Mischervorrichtung erfolgt die Zufuhr der zu vermischenden pastösen Massen radial in den im Wesentlichen rohrförmigen Abschnitt des Mischergehäuses hinein. Zu diesem Zweck ist der rohrförmige Abschnitt des Gehäuses mit zwei insbesondere diametral gegenüberliegenden radialen Einlassöffnungen versehen. Die pastösen Massenströme, die durch Aufbringen von Druck in den Mischer eingebracht werden, treffen innerhalb des rohrförmigen Abschnitts des Gehäuses auf mindestens ein Umlenkelement, das sich um die Achse des Mischerelements herum erstreckt. Dieses Umlenkelement rotiert mit dem sich drehenden Mischerelement und weist eine schräg zu einer Radialebene der Achse verlaufende Umlenkfläche auf. Mit anderen Worten handelt es sich bei dem mindestens einen Umlenkelement um einen im Wesentlichen sägezahnförmigen Keil, der gebogen um die Achse des Mischerelements herum verläuft. Dieses Umlenkelement fungiert wie eine Förderschnecke bei einer Schneckenpumpe und sorgt dafür, dass das anstehende pastöse Material direkt in axialer Richtung von den Einlassöffnungen in Richtung der Auslassöffnung abgefördert wird. Damit werden Rückkontaminationen weiter verhindert, da nämlich stets das mindestens eine Umlenkelement den axialen Transport der durch die Einlassöffnungen in den rohrförmigen Abschnitt des Mischergehäuses gelangenden pastösen Massen unterstützt.

Wie bereits zuvor dargelegt, kann das Umlenkelement eine Keilform aufweisen. Alternativ zu dieser Keilform bietet es sich an, das Umlenkelement als einen schraubenlinienförmig sich um die Achse herum verlaufenden Steg auszubilden; in diesem Ausführungsbeispiel weist das Umlenkelement also die Form eines Gewindes auf. Derartige umlaufende Stege sind von Schneckenpumpen und Förderschnecken her bekannt.

Vorteilhafterweise sind in Höhe der radialen Einlassöffnungen des Mischerraums des Gehäuses zwei Umlenkelemente auf der Achse angeordnet, die zweckmäßigerweise diametral einander gegenüberliegend angeordnet sind. Diese Umlenkelemente bzw. jedes Umlenkelement erstreckt sich dabei vor zugsweise über einen Winkelbereich von 180° bis 90°.

Um den erfindungsgemäßen Mischer auf die beiden Auslassstutzen einer Auspressvorrichtung aufstecken zu können, weist das Gehäuse an seinem hinteren Ende ein quer zur Achse gerichtetes Einsatzteil auf, von dem zwei Einlassstutzen abstehen. Das Einsatzteil befindet sich in einem konisch aufgeweiteten, sich an den Mischerraum anschließenden Gehäuseabschnitt des Mischers und weist zwei Kanäle auf, die sich von den Einlassstutzen aus erstrecken. Diese beiden Kanäle verlaufen unter Abwinklung radial in eine mittige zylindrische Aufnahmevertiefung auf der Innenseite des Einsatzteils, von der die Achse des Mischerelements mit dem mindestens einen Umlenkelement aufgenommen ist. Somit bildet also die zylindrische Aufnahmevertiefung des Einsatzteils einen Teilbereich des Mischerraums. Die beiden Einlassstutzen des Einsatzteils bilden die Ankopplungsöffnungen und werden auf die Auslassstutzen der Austrag- bzw. Auspressvorrichtung aufgesteckt. Ebenso ist es möglich, dass die Auslassstutzen auf die Einlassstutzen aufgesteckt werden. Ausgehend von den Einlassstutzen erstrecken sich dann die beiden Kanäle zum Mischerelement. Dabei ist gemäß einer vorteilhaften Variante der Erfindung vorgesehen, dass sich der Kanal, der sich von demjenigen Einlassstutzen aus erstreckt, über den der Massenstrom mit Überdosierung zu Beginn der Betätigung der Austragvorrichtung strömt, auf zwei oder mehr Teilkanäle aufteilt, die vorzugsweise zunächst in Umfangsrichtung um die zylindrische Aufnahmevertiefung bis in zwei oder mehr diesen Teilkanälen jeweils zugeordnete Einlassöffnungen erstreckt.

Die Ausbildung des Mischers dergestalt, dass von einer oder beiden Ankopplungsöffnungen aus sich mehrere Kanäle erstrecken, die in mehreren Einlassöffnungen enden, welche insbesondere gleichmäßig verteilt in den das Mischerelement aufweisenden Abschnitt des Mischergehäuses einmünden, hat neben einem verbesserten Strömungsverhalten der pastösen Massen vor allem auch den Vorteil, dass die in den Mischraum eingelassenen Materialien besser und homogener vermischt werden können. Hierzu trägt die räumlich verteilte Einbringung jeder der beiden Massen bzw. zumindest einer der beiden Massen bei. Denn diese verteilte Einbringung beider Massen bzw. zumindest einer der beiden Massen in den Mischraum hat den Vorteil, dass dabei bereits eine Art Vorvermischung durch die Aufteilung der Massenströme auf mehrere Einlassöffnungen erfolgt.

Die einzelnen Teilkanäle können gleiche oder unterschiedliche Länge auf weisen. Sie können in Form eines von der betreffenden Ankopplungsöffnung ausgehenden Sammelkanals ausgebildet sein, von dem mehrere Abzweigkanäle abzweigen, die in den Einlassöffnungen enden.

Dieses Konzept der räumlich verteilten Einbringung der Massenströme in den Mischraum ist unabhängig davon, ob die Einlassöffnungen nun radial oder axial angeordnet sind, einsetzbar. Mit anderen Worten können die Normalen der Öffnungsquerschnitte der Einlassöffnungen sowohl in Richtung der Längserstreckung des Mischerelements als auch radial dazu angeordnet sein.

Auch das im Vorstehenden beschriebene Konzept der konstruktiven Ausgestaltung des Mischers dahingehend, dass trotz eines eventuellen insbesondere zu Beginn der Materialabgabe auftretenden überhöhten Durchsatzes einer der beiden Massen beide zeitgleich in den Mischerraum gelangen, lässt sich ebenfalls unabhängig davon realisieren, ob nun die Normalen der Einlassöffnungen radial oder parallel zum Mischerelement oder in einem sonstigen Winkel dazu verlaufen.

In vorteilhafter Weiterbildung der Erfindung befinden sich innerhalb des rohrförmigen Gehäuseabschnitts zwischen den radialen Einlassöffnungen und der axialen Auslassöffnung mehrere Mischerarme, die nach Art von radialen Stegen von der Achse abstehen und bis nahe der Innenfläche des rohrförmigen Gehäuseabschnitts reichen. Diese Mischerarme sind innerhalb mehrerer Radialebenen von der Welle abstehend angeordnet und führen zu einer Umlenkung der sich axial durch das Gehäuse hindurch erstreckenden Massenströme. Hierdurch kommt es zur gewünschten Vermischung. Der Vermischungseffekt verstärkt sich noch, wenn diese Mischerarme, die auf Grund ihrer radialen Ausrichtung den direkten Strom zwischen den Einlassöffnungen und der Auslassöffnung verhindern, sich über einen größeren Winkelbereich, beispielsweise 90° erstrecken. Dies kann dadurch realisiert werden, dass benachbarte Mischerarme durch einen umlaufenden Teilabschnitt miteinander verbunden sind. Auf diese Weise entstehen also nach Art von Viertelkreisen ausgebildete Mischerarme, wobei es günstig sein kann, wenn diese Viertelkreise in ihren in Umfangsrichtung betrachtet mittleren Abschnitten weiter von der Innenfläche des rohrförmigen Abschnitts des Gehäuses abstehen als an ihren Enden. Zweckmäßig ist es, wenn von Radialebene zu Radialebene in Umfangsrichtung versetzt jeweils zwei benachbarte radial verlaufende Mischerarme untereinander in der oben beschriebenen Weise verbunden sind.

Zusätzlich zu den zuvor beschriebenen starren Mischerarmen ist es für den Durchmischungsvorgang von Vorteil, wenn das Mischerelement zusätzliche flexible Abstreiferelemente aufweist, die aufgrund ihrer Flexibilität bzw. aufgrund zumindest ihrer flexibel ausgebildeten von der Achse beabstandeten freien Enden an der Innenwand des rohrförmigen Gehäuses entlang streichen. Alternativ können die Abstreiferelemente auch starr ausgebildet sein und tangential von der Achse des Mischerelements abstehen. Den zwei unterschiedlichen Radialebenen des Mischerelements sind dann jeweils zwei sozusagen diametral gegenüberliegend angeordnete starre Abstreiferelemente angeordnet. Schließlich ist es auch möglich, flexible und starre Abstreiferelemente gemeinsam an dem Mischerelement vorzusehen.

Bei einer weiteren vorteilhaften Ausgestaltung der Erfindung ist vorgesehen, dass die Mischerarme der in axialer Richtung zu den Einlassöffnungen des rohrförmigen Abschnitts des Gehäuses benachbarten ersten Radialebenen kürzer sind als die Mischerarme in den übrigen zweiten Radialebenen. Damit ist der Abstand zwischen den radial außenliegenden Enden der Mischerarme zum rohrförmigen Gehäuseabschnitt innerhalb der ersten Radialebenen größer als innerhalb der zweiten Radialebenen. Dies führt zu einem größeren Mischerraum im Bereich des rohrförmigen Gehäuseabschnitts, der sich an die Einlassöffnungen anschließt. Dieser größere Mischerraum hat den Vorteil, dass durch die Auspress- bzw. Austragvorrichtung bedingte Dosierungstoleranzen besser kompensiert werden. Durch die zusätzliche Anordnung der tangential abstehenden Abstreiferelemente innerhalb dieses vergrößerten Mischraumes hat die jeweils vorlaufende Materialkomponente eine längere Verweilzeit im Mischraum, wodurch mehr Zeit gegeben ist, um die langsamere Materialkomponente zu der vorlaufenden Materialkomponente zu mischen.

Ein größerer Mischraum in dem zuvor beschriebenen Bereich wird jedoch vorteilhafterweise dadurch realisiert, dass die Achse des Mischerelements im Durchmesser kleiner ist als im übrigen Bereich und die Mischerarme sich radial genauso weit erstrecken wie sämtliche anderen Mischerarme, nämlich bis unmittelbar zur Innenseite des rohrförmigen Gehäuseabschnitts.

Nachfolgend wird die Erfindung anhand von in den Figuren dargestellten Ausführungsbeispielen eines dynamischen Mischers näher erläutert. Im einzelnen zeigen:
- Fig. 1: eine Gesamtseitenansicht einer Austragvorrichtung für vermischte pastöse Komponenten,
- Fig. 2: einen Längsschnitt durch einen dynamischen Mischer nach einer ersten Ausführungsform, wie er bei der Austragvorrichtung gemäß Fig. 1 eingesetzt wird,
- Fig. 3 bis 6: Querschnittsansichten durch den Mischer gemäß Fig. 2 entlang der dort angegebenen Linien III-III, IV-IV, V-V und VI-VI,
- Fig. 7: eine Querschnittsansicht ähnlich der gemäß Fig. 6, jedoch bei einer alternativen Ausgestaltung des Mischerelements,
- Fig. 8: einen Längsschnitt durch einen dynamischen Mischer nach einer zweiten Ausführungsform, wie er bei der Austragvorrichtung gemäß Fig. 1 eingesetzt wird, und
- Fig. 9: eine Ansicht auf die Rückwand eines dynamischen Mischers nach einer dritten Ausführungsform, wie er bei der Austragvorrichtung gemäß Fig. 1 eingesetzt wird.

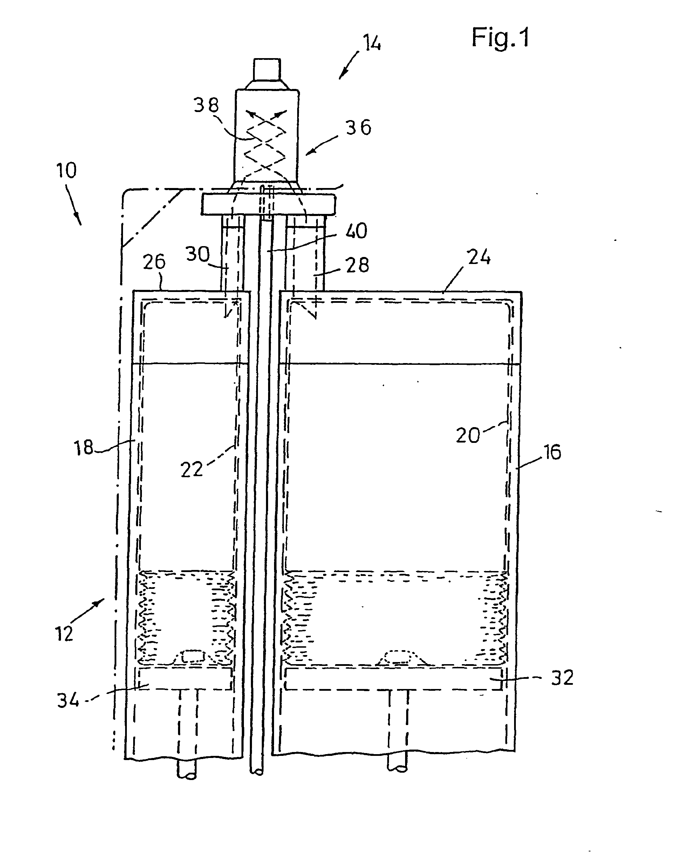

In Fig. 1 ist eine Austragvorrichtung 10 für zwei miteinander zu vermischende pastöse Komponenten in Seitenansicht dargestellt. Die Vorrichtung 10 umfasst einen Auspressteil 12 und einen Mischerteil 14, wobei der Auspressteil 12 zwei Druckbehälter 16, 18 zur Aufnahme zweier die pastösen Massen beinhaltenden Schlauchbeutel 20, 22 aufweist. An den vorderen stirnseitigen Enden 24, 26 der Druckbehälter 16, 18 weisen diese Ausgabeöffnungen definierende Auslassstutzen 28, 30 auf, über die bei Ausübung eines Drucks auf das hintere Ende der Schlauchbeutel 20, 22 deren Inhalt ausgebracht wird. Die Druckbeaufschlagung der Schlauchbeutel 20, 22 erfolgt mittels Druckstempeln 32, 34, die motorisch angetrieben sind, was hier nicht näher dargestellt ist.

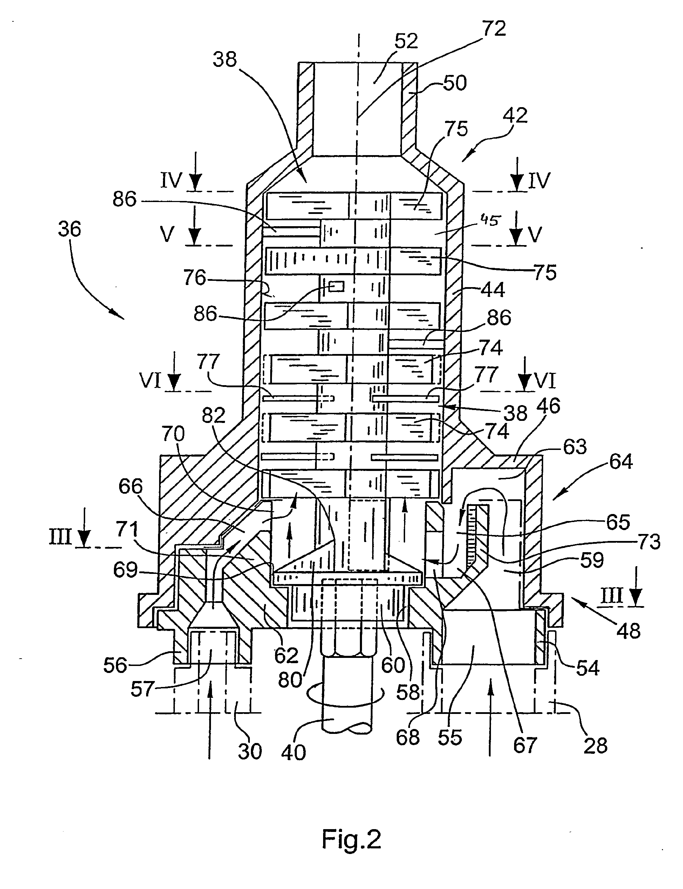

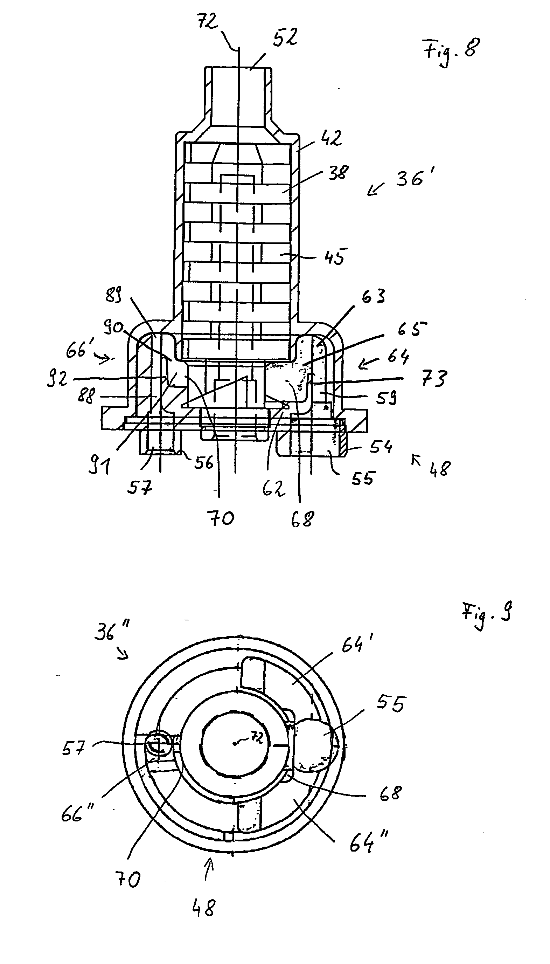

Auf die Auslassstutzen 28, 30 ist ein dynamischer Mischer 36 aufgesteckt, der anhand der Fig. 2 bis 7 weiter unten genauer beschrieben werden wird. Ganz allgemein lässt sich zu diesem dynamischen Mischer 36 sagen, dass sein Mischerelement 38 motorisch angetrieben ist. Zu diesem Zweck ist das Mischerelement 38 mit einer Antriebsstange 40 kuppelbar, die von einem ebenfalls nicht dargestellten Motor drehend angetrieben wird. In gleicher Weise ist es möglich, einen in den Fig. 8 bzw. 9 dargestellten Mischer 36' oder 36" auf die Auslassstutzen 28, 30 der Vorrichtung 10 aufzustecken.

Die Einzelheiten des dynamischen Mischers 36 werden insbesondere anhand von Fig. 2 deutlich. In dieser Figur ist ein Längsschnitt durch den Mischer 36 dargestellt. Der Mischer 36 weist ein Gehäuse 42 auf, das einen im Wesentlichen zylindrischen bzw. rohrförmigen Abschnitt 44 umfasst, der einen Mischerraum 45 definiert, in dem das Mischerelement 38 angeordnet ist. Das Gehäuse 42 weist ferner einen sich an den rohrförmigen Abschnitt 44 anschließenden konisch aufgeweiteten Ankopplungsabschnitt 46 an dem dem Auspressteil 12 zugewandten hinteren Ende 48 und ein diesem gegenüberliegendes verjüngtes vorderes Ende 50 auf. Das verjüngte Ende 50 ist als Auslassstutzen ausgebildet und definiert die Auslassöffnung 52 für das Materialgemisch, während am hinteren Ende 48 des Gehäuses 42 zwei Einlassstutzen 54, 56 angeordnet sind, die Ankopplungsöffnungen 55 und 57 bilden und auf die Auslassstutzen 28,30 des Auspressteils 12 aufsteckbar sind. Zwischen den beiden Einlassstutzen 54, 56 befindet sich eine Durchbrechung 58, in der das eine Ende 60 des Mischerelements 38 drehbar gelagert ist. Über diese Durchbrechung ist die Antriebsstange 40 mit dem Mischerelement 38 kuppelbar.

Die Einlassstutzen 54, 56 und die Durchbrechung 58 sind in einem Einsatzteil 62 ausgebildet, das am hinteren Ende 48 des Gehäuses 42 in dessen konischen Ankopplungsabschnitt 46 eingesteckt ist. Ausgehend von den Einlassstutzen 54, 56 erstrecken sich durch das Einsatzteil 62 zwei Kanäle 64, 66, die unter Umlenkung in radialen Öffnungen 68, 70 münden. Diese Einlassöffnungen 68, 70 sind bezogen auf den Abschnitt 44 des Gehäuses 42 radial angeordnet. Über die Kanäle 64, 66 werden die beiden pastösen Komponenten in den dynamischen Mischer 36 hinein transportiert, wo sie dann in radialer Richtung auf das Mischerelement 38 auftreffen.

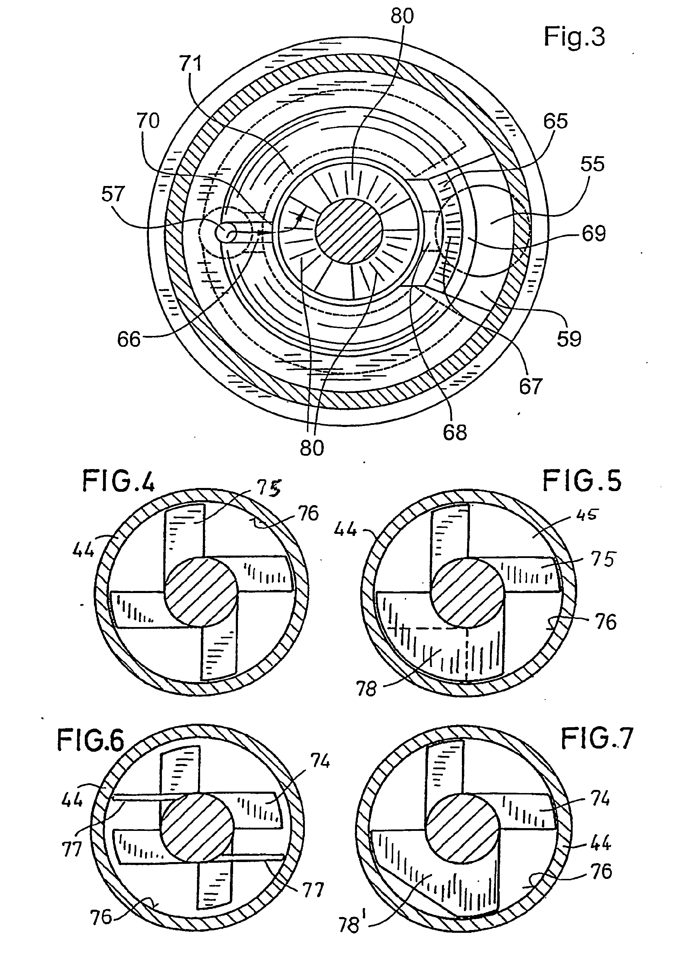

Wie anhand der Figuren 2 und 3 zu erkennen ist, weist das Einsatzteil 62 eine zentrale im Wesentlichen zylindrische Aufnahmevertiefung 69 auf, die konzentrisch zur Durchbrechung 58 angeordnet ist und in die das Mischerelement 38 eingesetzt ist. In der zylindrischen Wandung 71 der Aufnahmevertiefung 69 sind die Einlassöffnungen 68, 70 eingebracht. Ferner sind in diesem Bereich auch die Kanäle 64, 66 ausgebildet. Diese Kanäle 64, 66 sind als oben offene Nuten oder Aussparungen ausgebildet, die zusammen mit dem im Wesentlichen konisch aufgeweiteten Ankopplungsabschnitt 46 die allseits geschlossenen Kanäle bilden.

Wie insbesondere anhand von Fig. 2 zu erkennen ist, ist der erste Kanal 64 in mehrere unterschiedlich verlaufende Abschnitte unterteilt. So weist dieser erste Kanal 64 einen sich an die Ankopplungsöffnung 55 anschließenden ersten Teilabschnitt 59 auf, der sich in axialer Richtung des Mischerelements 38 erstreckt. Am Ende dieses ersten Teilabschnitts 59 befindet sich ein U-bogenförmiger Umlenkungsabschnitt 63, der in einen zweiten geradlinigen Teilabschnitt 65 übergeht, um von diesem aus über einen im Wesentlichen als 90°-Bogen ausgeführten weiteren Umlenkungsabschnitt 67 in der Einlassöffnung 68 zu enden. Die beiden Teilabschnitte 59 und 65 erstrecken sich parallel zueinander, wobei ihre beiden parallelen Längsachsen in einer gemeinsamen radialen Ebene zur Längsachse 72 verlaufen. Die besondere im Wesentlichen S-förmige Ausbildung des ersten Kanals 64 wird im Zusammenspiel zwischen dem Gehäuse 42 und einem abstehenden Wandelement 73 des Einsatzteils 62 realisiert (siehe auch Fig. 3).

Dadurch, dass der Kanal 64 sich zunächst in Richtung der Auslassöffnung 52 erstreckt und danach umgelenkt wird, um dann zurück in Richtung auf das hintere Ende des Mischers 36 zu verlaufen, statt wie der Kanal 66 ausgehend von seiner Ankopplungsöffnung 55 direkt radial in die Einlassöffnung 70 einzumünden, kann dem Kanal 64 eine größere Länge verliehen werden als dem Kanal 66. Durch das zusätzlich geschaffene Kanalvolumen entsteht mit anderen Worten ein Totvolumen, das zunächst aufgefüllt werden muss, damit die strömende Masse weiter in die Einlassöffnung 68 strömen kann. Damit werden Überdosierungen der durch diesen Kanal strömenden Masse kompensiert.

Das Mischerelement 38 weist eine drehbar gelagerte Achse 72 auf, von der in einer Vielzahl von Radialebenen jeweils vier stegförmige Mischerarme 74, 75 im Wesentlichen radial abstehen. Die genaue Anordnung dieser Mischerarme 74, 75 ergibt sich aus der Schnittdarstellung gemäß Figuren 4 bis 6. Zu erkennen ist, dass die einen in Umfangsrichtung liegenden Begrenzungsseitenkanten der Mischerarme 74, 75 im Wesentlichen tangential zur Umfangsfläche der Achse 72 verlaufen. Zu erkennen ist ferner, dass die in Strömungsrichtung betrachtet ersten Mischerarme 74 kürzer sind als die der Auslassöffnung 52 zugewandt angeordneten Mischerarme 75. Mit anderen Worten ist also der radiale Abstand der Mischerarme 74 zur Innenfläche 76 des rohrförmigen Abschnitts 44 größer als im Falle der Mischerarme 75. Damit ergibt sich in Strömungsrichtung der Massen betrachtet auf die Einlassöffnungen 68, 70 folgend ein Mischraumabschnitt innerhalb des Gehäuses 42, der größer ist als der Mischraumabschnitt, in dem die längeren Mischerarme 75 angeordnet sind. Zwischen benachbarten Radialebenen von Mischerarmen 74 sind überdies tangential abstehende Abstreiferelemente 77 angeordnet, die zu einer Verbesserung der Durchmischung beitragen. Der volumenmäßig größere erste Abschnitt des Mischerraums sorgt darüber hinaus für eine größere Verweildauer der ggf. auch im Mischerraum noch voreilenden einen Masse, so dass für die langsamer strömende andere Masse genügend Zeit verbleibt, um sich mit der erstgenannten Masse homogen zu vermischen.

In Fig. 2 gestrichelt ist eine Variante des Mischers angedeutet, bei der die Achse 72 im Bereich der ersten Radialebenen dünner ist als innerhalb der übrigen Radialebenen. Die Mischerarme 74, 75 weisen dabei sämtlich die gleiche Erstreckung auf, nämlich bis unmittelbar nahe an den Gehäuseabschnitt 44.

Wie sich aus Fig. 4 ergibt, sind also pro Radialebene vier Mischerarme 74 vorgesehen, die gemäß Fig. 2 bis nahe an die Innenfläche 76 des Gehäuseabschnitts 44 reichen. Der gesamte Bereich zwischen den Einlassöffnungen 68, 70 und dem Ende des Mischerelements 38, das sich bis zum sich verjüngenden Ende 50 des Gehäuses 42 erstreckt, ist mit diesen Mischerarme 74 versehen. Zusätzlich weist das Mischerelement 38 nach Art von Viertelkreisflächen ausgebildete Mischerarme 78 auf, die durch Verbinden jeweils zweier benachbarter Mischerarme 74 eine Radialebene gebildet sind (siehe beispielsweise die Schnittdarstellung gemäß Fig. 5). In dieser Ausgestaltung ist die radial außenliegende Begrenzungskante des Mischerarms 78 kreisbogenförmig ausgebildet, während sie bei der Alternativen gemäß Fig. 7 sekantiell verläuft. Der Mischerarm 78' gemäß Fig. 7 weist also in einem mittleren Umfangsabschnitt einen größeren Abstand zur Innenfläche 76 des Gehäuseabschnitts 44 auf.

Während die Mischerarme 74, 78, 78' auf Grund ihrer radialen Erstreckung bis nahe an den Gehäuseabschnitt 44 bei Rotation des Mischerelements 38 für eine Umlenkung und damit Verwirbelung der an sich axial strömenden pastösen Massen sorgen, weist das Mischerelement 38 im Bereich der radialen Einlassöffnungen 68, 70 (in diesem Ausführungsbeispiel) drei Umlenkelemente 80 auf, die gleichmäßig um 120° versetzt gegeneinander angeordnet und nach Art einer Förderschnecke ausgebildet sind. Die Umlenkelemente 80 sind als sägezahnförmige Keile ausgebildet, die sich über etwa 60° um die Achse 72 des Mischerelements 38 herum erstrecken. Die Umlenkelemente 80 weisen eine in Umfangsrichtung ansteigende Umlenkfläche 82 auf, die in Richtung zur Auslassöffnung 52 des dynamischen Mischers 36 weist und winklig zu einer radial zur Achse 72 verlaufenden Ebene verlaufen. Diese Umlenkelemente 80 verlaufen also abschnittsweise schraubenlinienförmig und sorgen für eine axiale Bewegungskomponente der pastösen Massenströme. Damit unterstützen die Umlenkelemente 80 den Abtransport von pastöser Masse, die aus den Einlassöffnungen 68, 70 in den Gehäuseabschnitt 44 eindringt. Dieses unterstützende und damit verstärkende Abführen der pastösen Massen in axialer Richtung verringert die Gefahr der Kontamination der beiden pastösen Massen, d.h. die ungewollte Vermischung bzw. Rückkontamination der beiden pastösen Massen über die Einlassöffnungen 68, 70 in die Kanäle 64, 66 hinein und gegebenenfalls weiter bis in die Auslassstutzen 28, 30. Denn wenn es in diesen Bereichen zu einer Kontamination und damit zu einer Polymerisation kommt, lässt sich aufgrund der Verstopfung der Auslassstutzen 28, 30 das gegebenenfalls noch in den Schlauchbeuteln 20, 22 befindliche Restmaterial nicht mehr austragen. Abweichend von der Darstellung in Figur 2 können die Umlenkelemente 80 so ausgebildet sein, dass zumindest ihr in Bewegungsrichtung hinteres Ende so weit in Richtung der Auslassöffnung 52 des dynamischen Mischers 36 in den Mischerraum 45 ragt, dass dieses sich bis an beide Einlassöffnungen 68, 70 erstreckt. Dadurch kann der durch die Einlassöffnungen 68, 70 eingebrachte Massenstrom zur Verbesserung der Durchmischung und zur Verringerung einer Rückkontamination kurzzeitig abgeschnitten oder zumindest verringert werden.

Zusätzlich zu den Umlenkelementen 80 weist das Mischerelement 38 zwei diametral gegenüberliegende Abstreiferstege 84 auf, die von der Achse 72 des Mischerelements 38 radial beabstandet sind und parallel zur Achse 72 verlaufen. Die Abstreiferstege 84 bewegen sich bei Rotation des Mischerelements 38 mit geringem Abstand innen entlang der zylindrischen Wandung 71 des Einsatzteils 62 und tragen zu einer insgesamt homogeneren Durchmischung der beiden Massenströme bei. Wie anhand von Fig. 2 zu erkennen ist, verbinden die beiden Abstreiferstege 77 zwei diametral gegenüberliegende Mischerarme 74 innerhalb der sich an die Einlassöffnungen 68, 70 anschließenden ersten Radialebene von Mischerarmen mit dem in der Durchbrechung 58 des Einsatzteils 62 angeordneten Ende des Mischerelements 38.

Anhand von Fig. 6 soll noch auf ein weiteres Merkmal des dynamischen Mischers 36 eingegangen werden. Bei den zuvor erwähnten Mischerarmen 74 handelt es sich um starre im Wesentlichen radial abstehende Stege, die auf Grund der Rotation der Achse 72 zu einer Verwirbelung der Massenströme führen. Zusätzlich zu den starren Mischerarmen 74, 75 und den Abstreiferelementen 77 kann der dynamische Mischer 36 nach Art von dünnen flexiblen Stegen ausgebildete weitere Mischerarme 86 aufweisen, die von innen an der Innenseite 76 des Gehäuseabschnitts 44 entlang streichen. Auch diese zusätzlichen flexiblen Mischerarme 86 sorgen für eine Verwirbelung der Massenströme. Von den flexiblen Mischerarmen 86 existieren in mehreren aufeinanderfolgenden Radialebenen des Mischerelements 38 jeweils eines pro Ebene, wobei diese Mischerarme 86 um einen konstanten Winkelbereich von Radialebene zu Radialebene versetzt angeordnet sind. Selbiges gilt für die Mischerarme 78 bzw. 78', die jeweils zwei benachbarte Mischerarme 74, 75 miteinander verbinden und ebenfalls um in diesem Fall 90° versetzt von Radialebene zu Radialebene angeordnet sind. Die Mischerarme 86 und die Mischerarme 78 bzw. 78' sind also längs einer Schraubenlinie um die Achse 72 herum gleichmäßig verteilt angeordnet. Beide Mischerarmtypen eignen sich vorzüglich für eine homogene Durchmischung der pastösen Massen in dem auch als Durchlaufmischer zu bezeichnenden dynamischen Mischer 36.

Der in Fig. 8 dargestellte dynamische Mischer 36' entspricht im Wesentlichen dem in Fig. 2 dargestellten Mischer 36, wobei einander entsprechende Bauteile mit denselben Bezugsziffern versehen sind. Die Gestaltung des ersten Kanals 64 mit einem sich an die Ankopplungsöffnung 55 anschließenden ersten Teilabschnitt 59, welcher sich in axialer Richtung des Mischerelements erstreckt, einem sich an dem Ende des ersten Teilabschnitts 59 anschließenden U-förmigen Umlenkungsabschnitt 63 und mit einem zweiten geradlinigen Teilabschnitt 65 entspricht in etwa der Ausgestaltung des ersten Kanals 64 nach der Ausführungsform gemäß Fig. 2. Hierzu ist in dem Einsatzteil 62 ein im Wesentlichen parallel zu der Längsachse 72 des Mischers 36' verlaufendes Wandelement 73 ausgebildet.

In gleicher Weise ist auch der zweite Kanal 66' des dynamischen Mischers 36' mit einem sich an die Ankopplungsöffnung 57 anschließenden ersten Teilabschnitt 88 versehen, der sich in axialer Richtung des Mischelements 38 erstreckt. Am Ende dieses ersten Teilabschnitts 88 befindet sich ein U-bogenförmiger Umlenkungsabschnitt 89, der in einen zweiten geradlinigen Teilabschnitt 90 übergeht, um von diesem aus über einen im Wesentlichen als 90° Bogen ausgeführten weiteren Umlenkungsabschnitt 91 in der Einlassöffnung 70 zu enden. Der Umlenkungsabschnitt 89, der zweite geradlinige Teilabschnitt 90 und der weitere Umlenkungsabschnitt 91 bilden dabei zusammen einen den Weg von der Ankopplungsöffnung 57 zu der Einlassöffnung 70 verlängernden Verlängerungsabschnitt. Die beiden Teilabschnitte 88 und 90 erstrecken sich parallel zueinander, wobei ihre beiden parallelen Längsachsen in einer gemeinsamen radialen Ebene zur Längsachse 72 verlaufen. Die besondere im Wesentlichen S-förmige Ausbildung des zweiten Kanals 66' wird im Zusammenspiel zwischen dem Gehäuse 42 und einem abstehenden Wandelement 92 des Einsatzteils 62 realisiert.

Dadurch, dass der Kanal 66' sich zunächst in Richtung der Auslassöffnung 52 erstreckt und danach umgelenkt wird, um dann zurück in Richtung auf das hintere Ende 48 des Mischers 36' zu verlaufen, wird dem Kanal 66' eine größere Länge verliehen und der Strömungswiderstand erhöht. Folglich verringert sich die Gefahr der Kontamination der beiden pastösen Massen, d.h. die ungewollte Vermischung bzw. Rückkontamination der beiden pastösen Massen über die Einlassöffnungen 68, 70 in die Kanäle 64, 66' hinein und gegebenenfalls weiter bis in die Auslassstutzen. Wenn es in diesen Bereichen zu einer Rückkontamination und damit zu einer Polymerisation der Massen kommt, lässt sich, wie oben erwähnt, aufgrund der Verstopfung der Auslassstutzen das gegebenenfalls noch in den Schlauchbeuteln befindliche Restmaterial nicht mehr austragen.

Die größere Länge des Kanals 66' wird jedoch durch die oben beschriebene Ausgestaltung des Kanals 64 kompensiert, so dass die Massen durch die Kanäle 64 und 66' gleichzeitig über die Einlassöffnungen 68 bzw. 70 in den Mischerraum 45 gelangen.

In Fig. 9 ist eine weitere Ausführungsform eines dynamischen Mischers 36", gesehen von seinem hinteren Ende 48, dargestellt. Die Gestaltung des rohrförmigen Abschnitts 44 des Gehäuses 42 und des darin aufgenommenen Mischerelements 38 entspricht im Wesentlichen der der unter Bezugnahme auf die Figuren 1 bis 8 beschriebenen Ausführungsformen. Die Ausbildung der sich von den Ankopplungsöffnungen 55 und 57 zu den Einlassöffnungen 68 und 70 erstreckenden Kanäle weicht bei dieser Ausführungsform von den zuvor beschriebenen Ausführungsbeispielen ab.

Der sich zwischen der Ankopplungsöffnung 55 und der Einlassöffnung 68 erstreckende erste Kanal ist in zwei Teilkanäle 64', 64" aufgeteilt, die sich in entgegengesetzten Richtungen bogenförmig um die Längsachse 72 erstrecken. Beide Teilkanäle 64', 64" weisen dabei einen sich an die Ankopplungsöffnung 55 anschließenden ersten Teilabschnitt auf, welcher sich um etwa 45° um die Längsachse 72 erstreckt. Am Ende dieses ersten Teilabschnitts befindet sich ein U-bogenförmiger Umlenkungsabschnitt, der in einen zweiten bogenförmigen Teilabschnitt übergeht, welcher sich im Wesentlichen in axialer Richtung unterhalb des ersten Teilabschnitts erstreckt. Die beiden zweiten Teilabschnitte der Teilkanäle 64', 64" können dann in eine gemeinsame Einlassöffnung 68 oder in zwei voneinander getrennte Einlassöffnungen münden. Die Umlenkung zwischen den ersten und zweiten Teilabschnitten erfolgt um etwa 180°, so dass die Teilmassenströme in den Teilkanälen 64', 64" zunächst bogenförmig von der Ankopplungsöffnung 55 weggeleitet werden und nach der Umlenkung in einer in Richtung auf die Auslassöffnung 52 versetzten Ebene zu der Einlassöffnung 68 bzw. den Einlassöffnungen, die in der Nähe der Ankopplungsöffnung 55 angeordnet ist/sind, zurückgeführt wird.

Durch diese Ausgestaltung wird den Teilkanälen 64', 64" eine größere Länge verliehen, so dass zusätzliches Kanalvolumen entsteht, das zunächst ausgefüllt werden muss, damit die Masse in die Einlassöffnung 68 strömen kann. Beide Massen treten daher etwa zeitgleich in den Mischerraum 45 ein.

Der sich von Ankopplungsöffnung 57 zu der Einlassöffnung 70 erstreckende zweite Kanal 66" verläuft ebenfalls bogenförmig um die Längsachse 72. In der in Fig. 9 gezeigten Ausführungsform wird die strömende Masse in dem zweiten Kanal 66" um etwa 5° um die Längsachse 72 umgelenkt. Es ist jedoch auch möglich, andere, insbesondere größere, Umlenkungen um die Längsachse 72 zu realisieren. Weiterhin ist es auch möglich, auch den zweiten Kanal 66" mit zwei sich in entgegengesetzter Richtung bogenförmig um die Längsachse 72 erstreckenden Teilkanälen auszubilden.

Durch die Umlenkung in dem zweiten Kanal 66" wird dessen Länge nur unwesentlich vergrößert, während der Strömungswiderstand in dem zweiten Kanal 66" jedoch deutlich ansteigt. Hierdurch wird die Gefahr einer Rückkontamination erheblich reduziert.

Vorteilhafterweise liegen bei der in Fig. 9 gezeigten Ausführungsform die Einlassöffnungen 68, 70 der beiden Massen einander nahezu diametral gegenüber. Der Weg, den eine Masse vom Austritt aus einer Einlassöffnung in die im Wesentlichen gegenüberliegende Einlassöffnung der anderem Masse zurücklegen muss, bevor eine Rückkontamination auftreten kann, ist folglich so groß wie möglich gewählt. Die Gefahr der Rückkontamination wird auf diese Weise weiter verringert.

Selbstverständlich können die in den Ausführungsbeispielen dargestellten Ausgestaltungen des ersten und des zweiten Kanals beliebig miteinander kombiniert werden. So ist es beispielsweise möglich, eine bogenförmige Umlenkung des ersten Kanals und eine axiale Umlenkung des zweiten Kanals vorzusehen. In gleicher Weise kann auch bei einer axialen Umlenkung des ersten Kanals eine bogenförmige Umlenkung des zweiten Kanals realisiert werden.

## Patentansprüche

1. Vorrichtung zum Vermischen zweier pastöser Massen, insbesondere eine Dental-Abformmasse mit einer Katalysatormasse, mit
- einem Gehäuse (42), das einen Mischerraum (45) mit mindestens zwei Einlassöffnungen (68, 70) für die beiden pastösen Massen und eine Auslassöffnung (52) für die vermischten pastösen Massen aufweist, und
- einem Mischerelement (38), das insbesondere antreibbar in dem Mischerraum (45) angeordnet und in dem Gehäuse (42) um seine Längsachse (72) drehbar gelagert ist,
- wobei das Gehäuse (42) einen dem Mischerraum (45) vorgelagerten Ankopplungsabschnitt (46) mit zwei Ankopplungsöffnungen (55, 57) zum Verbinden mit zwei Ausgabeöffnungen (28, 30) einer Vorrichtung (10) zum Ausgeben der beiden pastösen Massen aufweist,
- wobei sich an die Ankopplungsöffnungen (55, 57) durch den Ankopplungsabschnitt bis zu den Einlassöffnungen (68, 70) des Mischerraums (45) erstreckende erste und zweite Kanäle (64, 66) anschließen und
- wobei die beiden Kanäle (64, 66) derart ausgebildet sind, dass für den ersten Kanal (64) die Dauer, die die pastöse Masse vom Eintritt in die Ankopplungsöffnung (55) des Ankopplungsabschnitts (46) bis zum Eintritt in die Einlassöffnung (68, 70) des Mischerraums (45) des Gehäuses (42) benötigt, größer ist als im zweiten Kanal (66),
**dadurch gekennzeichnet, dass** zumindest der erste Kanal (64) einen sich von der Ankopplungsöffnung (55) aus in axialer Richtung des Mischerelements (38) erstreckenden ersten Teilabschnitt (59), einen sich an diesen anschließenden Umlenkungsabschnitt (63) und einen zur zugehörigen Einlassöffnung (68) führenden zweiten Teilabschnitt (65) aufweist, wobei die Achsen des ersten und des zweiten Teilabschnitts (59, 65) in einer gemeinsamen Ebene mit der Längsachse (72) des Mischerelements (38) liegen.

2. Vorrichtung zum Vermischen zweier pastöser Massen, insbesondere eine Dental-Abformmasse mit einer Katalysatormasse, mit
- einem Gehäuse (42), das einen Mischerraum (45) mit mindestens zwei Einlassöffnungen (68, 70) für die beiden pastösen Massen und eine Auslassöffnung (52) für die vermischten pastösen Massen aufweist, und
- einem Mischerelement (38), das insbesondere antreibbar in dem Mischerraum (45) angeordnet und in dem Gehäuse (42) um seine Längsachse (72) drehbar gelagert ist,
- wobei das Gehäuse (42) einen dem Mischerraum (45) vorgelagerten Ankopplungsabschnitt (46) mit zwei Ankopplungsöffnungen (55, 57) zum Verbinden mit zwei Ausgabeöffnungen (28, 30) einer Vorrichtung (10) zum Ausgeben der beiden pastösen Massen aufweist,
- wobei sich an die Ankopplungsöffnungen (55, 57) durch den Ankopplungsabschnitt bis zu den Einlassöffnungen (68, 70) des Mischerraums (45) erstreckende erste und zweite Kanäle (64', 64", 66, 66', 66") anschließen und
- wobei die beiden Kanäle derart ausgebildet sind, dass für den ersten Kanal (64', 64") die Dauer, die die pastöse Masse vom Eintritt in die Ankopplungsöffnung (55) des Ankopplungsabschnitts (46) bis zum Eintritt in die Einlassöffnung (68, 70) des Mischerraums (45) des Gehäuses (42) benötigt, größer ist als im zweiten Kanal (66, 66', 66"),
**dadurch gekennzeichnet, dass** der erste Kanal (64', 64") einen sich von der Ankopplungsöffnung (55) aus bogenförmig um die Längsachse (72) des Mischerelements (38) erstreckenden ersten Teilabschnitt, einen in axialer Richtung des Mischerelements (38) zu dem ersten Teilabschnitt versetzten und zur zugehörigen Einlassöffnung (68) führenden zweiten Teilabschnitt und einen den ersten und den zweiten Teilabschnitt verbindenden Umlenkungsabschnitt aufweist, der von der Ankopplungsöffnung (55) weiter entfernt ist als die Einlassöffnung (68).

3. Vorrichtung zum Vermischen zweier pastöser Massen, insbesondere eine Dental-Abformmasse mit einer Katalysatormasse, mit
- einem Gehäuse (42), das einen Mischerraum (45) mit mindestens zwei Einlassöffnungen (68, 70) für die beiden pastösen Massen und eine Auslassöffnung (52) für die vermischten pastösen Massen aufweist, und
- einem Mischerelement (38), das insbesondere antreibbar in dem Mischerraum (45) angeordnet und in dem Gehäuse (42) um seine Längsachse (72) drehbar gelagert ist,
- wobei das Gehäuse (42) einen dem Mischerraum (45) vorgelagerten Ankopplungsabschnitt (46) mit zwei Ankopplungsöffnungen (55, 57) zum Verbinden mit zwei Ausgabeöffnungen (28, 30) einer Vorrichtung (10) zum Ausgeben der beiden pastösen Massen aufweist,
- wobei sich an die Ankopplungsöffnungen (55, 57) durch den Ankopplungsabschnitt bis zu den Einlassöffnungen (68, 70) des Mischerraums (45) erstreckende erste und zweite Kanäle (64, 64', 64", 66, 66', 66") anschließen und
wobei die beiden Kanäle derart ausgebildet sind, dass für den ersten Kanal (64, 64', 64") die Dauer, die die pastöse Masse vom Eintritt in die Ankopplungsöffnung (55) des Ankopplungsabschnitts (46) bis zum Eintritt in die Einlassöffnung (68, 70) des Mischerraums (45) des Gehäuses (42) benötigt, größer ist als im zweiten Kanal (66, 66', 66"),
**dadurch gekennzeichnet, dass** der zweite Kanal (66', 66") einen den Weg zwischen der Ankopplungsöffnung (57) und der zugehörigen Einlassöffnung (70) verlängernden Verlängerungsabschnitt (89, 90, 91) aufweist.

4. Vorrichtung nach Anspruch 1 oder 2, **dadurch gekennzeichnet, dass** die Achsen des ersten und des zweiten Teilabschnitts (59, 65) des ersten Kanals (64, 64', 64") parallel zueinander verlaufen.

5. Vorrichtung nach einem der Ansprüche 1 bis 4, **dadurch gekennzeichnet, dass** sich der Umlenkungsabschnitt (63) und/oder der Verlängerungsabschnitt (89, 90, 91) über wenigstens 90°, insbesondere über 180°, erstreckt.

6. Vorrichtung nach einem der Ansprüche 1 bis 5, **dadurch gekennzeichnet, dass** die Einlassöffnungen (68, 70) wenigstens eines der beiden Kanäle (64, 64', 64", 66, 66', 66") in axialer Richtung des Mischerelements (38) weisen.

7. Vorrichtung nach einem der Ansprüche 1 bis 5, **dadurch gekennzeichnet, dass** die Einlassöffnungen (68, 70) wenigstens eines der beiden Kanäle (64, 64', 64", 66, 66', 66") in radialer Richtung zum Mischerelement (38) weisen.

8. Vorrichtung nach einem der Ansprüche 1 bis 7, **dadurch gekennzeichnet, dass** sich an dem zweiten Teilabschnitt (65) ein weiterer Umlenkungsabschnitt (67) anschließt, der in der betreffenden Einlassöffnung (68) endet.

9. Vorrichtung nach Anspruch 5 und 8, **dadurch gekennzeichnet, dass** sich der weitere Umlenkungsabschnitt (67) über 90° erstreckt.

10. Vorrichtung nach einem der Ansprüche 3 bis 9, **dadurch gekennzeichnet, dass** der Verlängerungsabschnitt (89, 90, 91) zumindest bereichsweise bogenförmig um die Längsachse (72) des Mischerelements (38) verläuft.

11. Vorrichtung nach einem der Ansprüche 3 bis 9, **dadurch gekennzeichnet, dass** der Verlängerungsabschnitt (89, 90, 91) einen sich von der Ankopplungsöffnung (57) aus in axialer Richtung des Mischerelements (38) erstreckenden ersten Teilabschnitt (88), einen sich an diesen anschließenden Umlenkungsabschnitt (89) und einen zur zugehörigen Einlassöffnung (70) führenden zweiten Teilabschnitt (90) aufweist, wobei die Achsen des ersten und des zweiten Teilabschnitts (88, 90) in einer gemeinsamen Ebene mit der Längsachse (72) des Mischerelements (38) liegen.

12. Vorrichtung nach einem der Ansprüche 1 bis 11, **dadurch gekennzeichnet, dass** das Gehäuse (42) an seinem hinteren Ende (48) ein quer zur Achse (72) gerichtetes Einsatzteil (62) aufweist, das mit einer das hintere Ende (48) des Gehäuses (42) bildenden Außenseite und eine den Mischerraum (45) des Gehäuses (42) zugewandte Innenseite aufweist, die eine zylindrische Aufnahmevertiefung (69) für einen mindestens ein Umlenkelement (80) tragenden Abschnitt des Mischerelements (38) aufweist, und dass die Außenseite des Einsatzteils (62) die beiden Einlassstutzen (54, 56) aufweist, von denen aus sich durch das Einsatzteil (62) die beiden Kanäle (64, 64', 64", 66, 66', 66") erstrecken, die in die Einlassöffnungen (68, 70) bildenden radialen Öffnungen der zylindrischen Aufnahmevertiefung (69) münden.

13. Vorrichtung nach einem der Ansprüche 1 bis 12, **dadurch gekennzeichnet, dass** der erste Kanal (64) und/oder der zweite Kanal (66, 66', 66") jeweils zwei oder mehrere strömungsmäßig zueinander parallele Teilkanäle (64', 64") aufweist, die sich von der dem betreffenden Kanal zugeordneten Ankopplungsöffnung (55, 57) aus bis in getrennte Einlassöffnungen des Gehäuses (42) erstrecken.

14. Vorrichtung nach einem der vorhergehenden Ansprüche, **dadurch gekennzeichnet, dass** das Mischerelement (38) in Höhe der Einlassöffnungen (68, 70) mindestens ein Umlenkelement (80) zur Unterstützung des Transports der durch die Einlassöffnungen (68, 70) in den Mischerraum (45) des Gehäuses (42) gelangenden pastösen Massen in axialer Richtung aufweist, wobei das mindestens eine Umlenkelement (80) eine sich um die Achse (72) erstreckende und schräg zu einer Radialebene der Achse (72) verlaufende Umlenkfläche (82) aufweist.

15. Vorrichtung nach Anspruch 14, **dadurch gekennzeichnet, dass** das mindestens eine Umlenkelement (80) nach Art eines Keils ausgebildet ist.

16. Vorrichtung nach Anspruch 14 oder 15, **dadurch gekennzeichnet, dass** zwei Umlenkelemente (80) vorgesehen sind, die diametral gegenüberliegend um die Achse (72) herum angeordnet sind.

17. Vorrichtung nach einem der Ansprüche 14 bis 16, **dadurch gekennzeichnet, dass** die beiden Umlenkelemente (80) sich jeweils über einen Winkelbereich von 90° bis 180° erstreckt.

18. Vorrichtung nach einem der Ansprüche 14 bis 17, **dadurch gekennzeichnet, dass** das mindestens eine Umlenkelement (80) eine sich schraubenlinienförmig um die Achse (72) herum erstreckende Umlenkfläche (82) aufweist.

19. Vorrichtung nach einem der Ansprüche 1 bis 16, **dadurch gekennzeichnet, dass** jeweils eine gleiche Anzahl von Mischerarmen (74, 75) innerhalb mehrerer Radialebenen von dem Mischerelement (38) abstehen und bis nahe an die Innenfläche (76) des Mischerraums (45) des Gehäuses (42) reichen.

20. Vorrichtung nach Anspruch 19, **dadurch gekennzeichnet, dass** die Mischerarme (74) der in axialer Richtung zu den Einlassöffnungen (68, 70) des Mischerraums (45) des Gehäuses (42) benachbarten ersten Radialebenen kürzer sind als die Mischerarme (75) in den übrigen zweiten Radialebenen.

21. Vorrichtung nach Anspruch 19 oder 20, **dadurch gekennzeichnet, dass** innerhalb der oder zwischen den ersten und/oder zweiten Radialebenen von Mischerarmen (74, 75) von dem Mischerelement (38) abstehende Abstreiferelemente (77) angeordnet sind, die sich tangential zum Mischerelement (38) erstrecken.

22. Vorrichtung nach Anspruch 21, **dadurch gekennzeichnet, dass** innerhalb von einer der Anzahl von Mischerarmen (74) pro Radialebene gleichenden Anzahl von zweiten Radialebenen jeweils zwei in Umfangsrichtung benachbarte Mischerarme (74) untereinander über einen in Umfangsrichtung verlaufenden Teilabschnitt (78, 78') verbunden sind und dass diese Paare von miteinander verbundenen Mischerarmen (74) von zweiter Radialebene zu zweiter Radialebene in Umfangsrichtung versetzt angeordnet sind.

23. Vorrichtung nach einem der vorhergehenden Ansprüche, **dadurch gekennzeichnet, dass** das Mischerelement (38) in dem sich an die Einlassöffnungen (68, 70) des Mischerraumes (45) des Gehäuses (42) in axialer Richtung anschließenden Bereichs einen kleineren Durchmesser als in ihrem übrigen Bereich aufweist.

## Claims

1. Apparatus for mixing together two pasty materials, particularly for mixing a dental impression material with a catalyst material, said apparatus comprising:
- a housing (42) with a mixer chamber (45) having at least two inlets (68, 70) for the two pasty materials and an outlet (52) for the mixed pasty materials, and
- a mixer element (38) disposed in the mixer chamber (45) particularly in such a way that it is drivable and mounted in the housing (42) so as to be rotatable about its longitudinal axis (72),
- in which case the housing (42) includes a coupling section (46) which is disposed upstream of the mixer chamber (45) and has two coupling openings (55, 57) for connection to two dispensing openings (28, 30) of an apparatus (10) for dispensing the two pasty materials,
- in which case, first and second channels (64, 66), extending through the coupling section to the inlets (68, 70) of the mixer chamber (45), follow on from the coupling openings (55, 57) and
- in which case the two channels (64, 66) are formed in such a way that in respect of the first channel (64), the length of time the pasty mass needs to travel from the entrance into the coupling opening (55) of the coupling section (46) to the entrance into the inlet (68, 70) of the mixer chamber (45) of the housing (42) is greater than in the second channel (66),
**characterized in that** at least the first channel (64) comprises a first portion (59) extending from the coupling opening (55) in axial direction of the mixer element (38), an adjoining deflection section (63) and a second portion (65) leading to the related inlet (68), the axes of the first and second portions (59, 65) lying in a common plane with the longitudinal axis (72) of the mixer element (38).

2. Apparatus for mixing together two pasty materials, particularly for mixing a dental impression material with a catalyst material, said apparatus comprising:
- a housing (42) with a mixer chamber (45) having at least two inlets (68, 70) for the two pasty materials and an outlet (52) for the mixed pasty materials, and
- a mixer element (38) disposed in the mixer chamber (45) particularly in such a way that it is drivable and mounted in the housing (42) so as to be rotatable about its longitudinal axis (72),
- in which case the housing (42) includes a coupling section (46) which is disposed upstream of the mixer chamber (45) and has two coupling openings (55, 57) for connection to two dispensing openings (28, 30) of an apparatus (10) for dispensing the two pasty materials,
- in which case first and second channels (64', 64", 66, 66', 66"), extending through the coupling section to the inlets (68, 70) of the mixer chamber (45), follow on from the coupling openings (55, 57) and
- in which case the two channels are formed in such a way that in respect of the first channel (64', 64"), the length of time the pasty mass needs to travel from the entrance into the coupling opening (55) of the coupling section (46) to the entrance into the inlet (68, 70) of the mixer chamber (45) of the housing (42) is greater than in the second channel (66, 66', 66"),
**characterized in that** the first channel (64', 64") comprises a first portion extending from the coupling opening (55) in the shape of an arc around the longitudinal axis (72) of the mixer element (38), a second portion offset in axial direction of the mixer element (38) relative to the first portion and leading to the related inlet (68), and a deflection section which connects the first and second portions and is further away from the coupling opening (55) than the inlet (68).

3. Apparatus for mixing together two pasty materials, particularly for mixing a dental impression material with a catalyst material, said apparatus comprising:
- a housing (42) with a mixer chamber (45) having at least two inlets (68, 70) for the two pasty materials and an outlet (52) for the mixed pasty materials, and
- a mixer element (38) disposed in the mixer chamber (45) particularly in such a way that it is drivable and mounted in the housing (42) so as to be rotatable about its longitudinal axis (72),
- in which case the housing (42) includes a coupling section (46) which is disposed upstream of the mixer chamber (45) and has two coupling openings (55, 57) for connection to two dispensing openings (28, 30) of an apparatus (10) for dispensing the two pasty materials,
- in which case first and second channels (64, 64', 64", 66, 66', 66"), extending through the coupling section to the inlets (68, 70) of the mixer chamber (45), follow on from the coupling openings (55, 57) and
- in which case the two channels are formed in such a way that in respect of the first channel (64, 64', 64"), the length of time the pasty mass needs to travel from the entrance into the coupling opening (55) of the coupling section (46) to the entrance into the inlet (68, 70) of the mixer chamber (45) of the housing (42) is greater than in the second channel (66, 66', 66"),
**characterized in that** the second channel (66', 66") comprises an extension section (89, 90, 91) which extends the path between the coupling opening (57) and the related inlet (70).

4. Apparatus according to Claim 1 or 2, **characterized in that** the axes of the first and second portions (59, 65) of the first channel (64, 64', 64") run parallel to one another.

5. Apparatus according to one of Claims 1 to 4, **characterized in that** the deflection section (63) and/or extension section (89, 90, 91) extends over at least 90°, and in particular over 180°.

6. Apparatus according to one of Claims 1 to 5, **characterized in that** the inlets (68, 70) of at least one of the two channels (64, 64', 64", 66, 66', 66") are oriented in axial direction of the mixer element (38).

7. Apparatus according to one of Claims 1 to 5, **characterized in that** the inlets (68, 70) of at least one of the two channels (64, 64', 64", 66, 66', 66") are oriented in radial direction towards the mixer element (38).

8. Apparatus according to one of Claims 1 to 7, **characterized in that**, following on from the second portion (65), there is an additional deflection section (67) terminating in the related inlet (68).

9. Apparatus according to Claims 5 and 8, **characterized in that** the additional deflection section (67) extends over 90°.

10. Apparatus according to one of Claims 3 to 9, **characterized in that** the extension section (89, 90, 91) extends at least partly in the form of an arc around the longitudinal axis (72) of the mixer element (38).

11. Apparatus according to one of Claims 3 to 9, **characterized in that** the extension section (89, 90, 91) comprises a first portion (88) extending from the coupling opening (57) in axial direction of the mixer element (38), an adjoining deflection section (89) and a second portion (90) leading to the related inlet (70), the axes of the first and second portions (88, 90) lying in a common plane with the longitudinal axis (72) of the mixer element (38).

12. Apparatus according to one of Claims 1 to 11, **characterized in that** at its rear end (48) the housing (42) has an insert (62) which is oriented perpendicular to the axis (72) and comprises an outer side forming the rear end (48) of the housing (42) and an inner side facing the mixer chamber (45) of the housing (42), said inner side having a cylindrical recess (69) for receiving a portion of the mixer element (38) bearing at least one deflection element (80), and **in that** the outer side of the insert (62) has the two inlet connections (54, 56), from which the two channels (64, 64', 64", 66, 66', 66") extend through the insert (62) and open into the radial openings of the cylindrical recess (69) which form the inlets (68, 70).

13. Apparatus according to one of Claims 1 to 12, **characterized in that** the first channel (64) and/or second channel (66, 66', 66") each have two or more partial channels (64', 64"), running parallel to one another in terms of flow, which extend from the coupling opening (55, 57) associated with the respective channel to separate inlets of the housing (42).

14. Apparatus according to one of the preceding claims, **characterized in that**, at the level of the inlets (68, 70), the mixer element (38) has at least one deflection element (80) for encouraging movement in axial direction of the pasty materials arriving, via inlets (68, 70), in the mixer chamber (45) of the housing (42), said at least one deflection element (80) having a deflecting surface (82) which extends around the axis (72) and runs at an angle to a radial plane of said axis (72).

15. Apparatus according to Claim 14, **characterized in that** the at least one deflection element (80) is formed in the style of a wedge.

16. Apparatus according to Claim 14 or 15, **characterized in that** two deflection elements (80) are provided, which are disposed around the axis (72) on diametrically opposite sides thereof.

17. Apparatus according to one of Claims 14 to 16, **characterized in that** each of the two deflection elements (80) extends over an angular sector of between 90° and 180°.

18. Apparatus according to one of Claims 14 to 17, **characterized in that** the at least one deflection element (80) has a deflecting surface (82) extending around the axis (72) in the form of a helix.

19. Apparatus according to one of Claims 1 to 16, **characterized in that** in each case an identical number of mixer arms (74, 75) project from the mixer element (38) within a number of radial planes and reach almost as far as the inner surface (76) of the mixer chamber (45) of the housing (42).

20. Apparatus according to Claim 19, **characterized in that** the mixer arms (74) of the first radial planes in axial direction adjacent to the inlets (68, 70) of the mixer chamber (45) of the housing (42) are shorter than the mixer arms (75) in the remaining second radial planes.

21. Apparatus according to Claim 19 or 20, **characterized in that** stripper elements (77) projecting from the mixer element (38) and extending tangentially to the mixer element (38) are disposed within or between the first and/or second radial planes of mixer arms (74, 75).

22. Apparatus according to Claim 21, **characterized in that** within a number of second radial planes equalling the number of mixer arms (74) per radial plane, in each case two mixer arms (74) adjoining one another in circumferential direction are joined together via a portion (78, 78') which extends in circumferential direction and **in that** these pairs of connected mixer arms (74) are disposed in such a way as to be offset in circumferential direction from second radial plane to second radial plane.

23. Apparatus according to one of the preceding claims, **characterized in that** in the area adjacent in axial direction to the inlets (68, 70) of the mixer chamber (45) of the housing (42), the mixer element (38) has a smaller diameter than in its remaining area.

## Revendications

1. Dispositif permettant de mélanger deux masses pâteuses, en particulier une masse d'empreinte dentaire avec une masse de catalyseur, comportant :
- un boîtier (42), qui présente un espace de mélange (45) avec au moins deux ouvertures d'admission (68, 70) destinées aux deux masses pâteuses, et une ouverture d'évacuation (52) destinée aux masses pâteuses mélangées, et
- un élément mélangeur (38) qui est disposé dans l'espace de mélange (45), en particulier en pouvant être entraîné, et logé de manière à pouvoir tourner autour de son axe longitudinal (72) dans le boîtier (42),
- le boîtier (42) présentant une section de couplage (46) disposée en amont de l'espace de mélange (45), avec deux ouvertures de couplage (55, 57) permettant le raccordement avec deux ouvertures de sortie (28, 30) d'un dispositif (10) permettant de délivrer les deux masses pâteuses,
- des premier et second canaux (64, 66), s'étendant au travers de la section de couplage jusqu'aux ouvertures d'admission (68, 70) de l'espace de mélange (45), étant raccordés aux ouvertures de couplage (55, 57), et
- les deux canaux (64, 66) étant configurés de telle sorte que, pour le premier canal (64), la durée nécessaire à la masse pâteuse depuis l'entrée dans l'ouverture de couplage (55) de la section de couplage (46) jusqu'à l'entrée dans l'ouverture d'admission (68, 70) de l'espace de mélange (45) du boîtier (42) est supérieure à celle du second canal (66),
**caractérisé en ce qu'**au moins le premier canal (64) présente une première section partielle (59) s'étendant à partir de l'ouverture de couplage (55) dans la direction axiale de l'élément mélangeur (38), une section déflectrice (63) raccordée à celle-ci et une seconde section partielle (65) menant à l'ouverture d'admission (68) associée, les axes des première et seconde sections partielles (59, 65) se trouvant dans un plan commun avec l'axé longitudinal (72) de l'élément mélangeur (38).

2. Dispositif permettant de mélanger deux masses pâteuses, en particulier une masse d'empreinte dentaire avec une masse de catalyseur, comportant :
- un boîtier (42), qui présente un espace de mélange (45) avec au moins deux ouvertures d'admission (68, 70) destinées aux deux masses pâteuses et une ouverture d'évacuation (52) destinée aux masses pâteuses mélangées, et
- un élément mélangeur (38), qui est disposé dans l'espace de mélange (45), en particulier en pouvant être entraîné, et est logé de manière à pouvoir tourner autour de son axe longitudinal (72) dans le boîtier (42),
- le boîtier (42) présentant une section de couplage (46) située en amont de l'espace de mélange (45), comportant deux ouvertures de couplage (55, 57) permettant le raccordement avec deux ouvertures de sortie (28, 30) d'un dispositif (10) permettant de délivrer les deux masses pâteuses,
- des premier et second canaux (64', 64", 66, 66', 66"), s'étendant au travers de la section de couplage jusqu'aux ouvertures d'admission (68, 70) de l'espace de mélange (45), étant raccordées aux ouvertures de couplage (55, 57), et
- les deux canaux étant configurés de telle sorte que, pour le premier canal (64', 64"), la durée nécessaire à la masse pâteuse depuis l'entrée dans l'ouverture de couplage (55) de la section de couplage (46) jusqu'à l'entrée dans l'ouverture d'admission (68, 70) de l'espace de mélange (45) du boîtier (42) est supérieure à celle du second canal (66, 66', 66"),
**caractérisé en ce que** le premier canal (64', 64") présente une première section partielle s'étendant à partir de l'ouverture de couplage (55) en forme d'arc autour de l'axe longitudinal (72) de l'élément mélangeur (38), une seconde section partielle décalée par rapport à la première section partielle dans la direction axiale de l'élément mélangeur (38) et menant à l'ouverture d'admission (68) associée, et une section déflectrice raccordant les première et seconde sections partielles, qui est plus éloignée de l'ouverture de couplage (55) que l'ouverture d'admission (68).

3. Dispositif permettant de mélanger deux masses pâteuses, en particulier une masse d'empreinte dentaire avec une masse de catalyseur, comportant :
- un boîtier (42), qui présente un espace de mélange (45) avec au moins deux ouvertures d'admission (68, 70) destinées aux deux masses pâteuses et une ouverture d'évacuation (52) destinée aux masses pâteuses mélangées, et
- un élément mélangeur (38), qui est disposé dans l'espace de mélange (45), en particulier de manière à pouvoir être entraîné, et est logé de manière à pouvoir tourner autour de son axe longitudinal (72) dans le boîtier (42),
- le boîtier (42) présentant une section de couplage (46) disposée en amont de l'espace de mélange (45) avec deux ouvertures de couplage (55, 57) permettant le raccordement avec deux ouvertures de sortie (28, 30) d'un dispositif (10) permettant de délivrer les deux masses pâteuses,
- des premier et second canaux (64, 64', 64", 66, 66', 66"), s'étendant au travers de la section de couplage jusqu'aux ouvertures d'admission (68, 70) de l'espace de mélange (45), étant raccordés aux ouvertures de couplage (55, 57) et
- les deux canaux étant configurés de telle sorte que, pour le premier canal (64, 64', 64"), la durée nécessaire à la masse pâteuse depuis l'entrée dans l'ouverture de couplage (55) de la section de couplage (46) jusqu'à l'entrée dans l'ouverture d'admission (68, 70) de l'espace de mélange (45) du boîtier (42) est supérieure à celle du second canal (66, 66', 66"),
**caractérisé en ce que** le second canal (66', 66") présente une section de prolongement (89, 90, 91) rallongeant la trajectoire entre l'ouverture de couplage (57) et l'ouverture d'admission (70) associée.

4. Dispositif selon la revendication 1 ou 2, **caractérisé en ce que** les axes de la première et de la seconde sections partielles (59, 65) du premier canal (64, 64', 64") s'étendent parallèlement l'un à l'autre.

5. Dispositif selon l'une quelconque des revendications 1 à 4, **caractérisé en ce que** la section déflectrice (63) et/ou la section de prolongement (89, 90, 91) s'étend sur au moins 90°, en particulier sur 180°.

6. Dispositif selon l'une quelconque des revendications 1 à 5, **caractérisé en ce que** les ouvertures d'admission (68, 70) d'au moins l'un des deux canaux (64, 64', 64", 66, 66', 66") sont orientées dans la direction axiale de l'élément mélangeur (38).

7. Dispositif selon l'une quelconque des revendications 1 à 5, **caractérisé en ce que** les ouvertures d'admission (68, 70) d'au moins l'un des deux canaux (64, 64', 64", 66, 66', 66") sont orientées dans la direction radiale par rapport à l'élément mélangeur (38).

8. Dispositif selon l'une des revendications 1 à 7, **caractérisé en ce qu'**une section déflectrice supplémentaire (67) est raccordée à la seconde section partielle (65), laquelle section déflectrice supplémentaire débouche dans l'ouverture d'admission (68) associée.

9. Dispositif selon la revendication 5 et 8, **caractérisé en ce que** la section déflectrice supplémentaire (67) s'étend sur 90°.

10. Dispositif selon l'une des revendications 3 à 9, **caractérisé en ce que** la section de prolongement (89, 90, 91) s'étend au moins par zones en forme d'arc autour de l'axe longitudinal (72) de l'élément mélangeur (38).

11. Dispositif selon l'une des revendications 3 à 9, **caractérisé en ce que** la section de prolongement (89, 90, 91) présente une première section partielle (88) s'étendant à partir de l'ouverture de couplage (57) dans la direction axiale de l'élément mélangeur (38), une section déflectrice (89) raccordée à celle-ci et une seconde section partielle (90) menant à l'ouverture d'admission (70) associée, les axes de la première et de la seconde sections partielles (88, 90) se trouvant dans un plan commun avec l'axe longitudinal (72) de l'élément mélangeur (38).

12. Dispositif selon l'une des revendications 1 à 11, **caractérisé en ce que** le boîtier (42) présente, au niveau de son extrémité arrière (48), une pièce rapportée (62) orientée transversalement par rapport à l'axe (72), qui présente une face externe formant l'extrémité arrière (48) du boîtier (42) et une face interne orientée vers l'espace de mélange (45) du boîtier (42) et qui comporte un renfoncement de réception (69) cylindrique destiné à une section de l'élément mélangeur (38) supportant au moins un élément déflecteur (80), et **en ce que** la face externe de la pièce rapportée (62) présente les deux raccords d'admission (54, 56), à partir desquels s'étendent les deux canaux (64, 64', 64", 66, 66', 66") passant au travers de la pièce rapportée (62), lesquels débouchent dans des ouvertures radiales du renfoncement de réception cylindrique (69) formant les ouvertures d'admission (68, 70).

13. Dispositif selon l'une des revendications 1 à 12, **caractérisé en ce que** le premier canal (64) et/ou le second canal (66, 66', 66") présente chacun deux ou plusieurs canaux partiels (64', 64") parallèles entre eux en termes d'écoulement, qui s'étendent de l'ouverture de couplage (55, 57) affectée au canal concerné jusqu'aux ouvertures d'admission séparées du boîtier (42).

14. Dispositif selon l'une des revendications précédentes, **caractérisé en que** l'élément mélangeur (38) présente, au niveau des ouvertures d'admission (68, 70), au moins un élément déflecteur (80) permettant de favoriser le transport dans la direction axiale des masses pâteuses parvenant dans l'espace de mélange (45) du boîtier (42) en passant au travers des ouvertures d'admission (68, 70), le au moins un élément déflecteur (80) présentant une surface déflectrice (82) s'étendant autour de l'axe (72) et de façon inclinée par rapport à un plan radial de l'axe (72).

15. Dispositif selon la revendication 14, **caractérisé en que** le au moins un élément déflecteur (80) est configuré sous la forme de coin.

16. Dispositif selon la revendication 14 ou 15, **caractérisé en ce que** deux éléments déflecteurs (80) sont prévus, lesquels sont disposés de manière diamétralement opposée autour de l'axe (72).

17. Dispositif selon l'une des revendications 14 à 16, **caractérisé en ce que** les deux éléments déflecteurs (80) s'étendent chacun sur une plage angulaire comprise entre 90° et 180°.

18. Dispositif selon l'une quelconque des revendications 14 à 17, **caractérisé en ce que** le au moins un élément déflecteur (80) présente une surface déflectrice (82) s'étendant de manière hélicoïdale autour de l'axe (72).

19. Dispositif selon l'une des revendications 1 à 16, **caractérisé en ce que** à chaque fois un nombre identique de bras mélangeurs (74, 75) font saillie par rapport à l'élément mélangeur (38) à l'intérieur de plusieurs plans radiaux, et s'étendent jusqu'à proximité de la surface interne (76) de l'espace de mélange (45) du boîtier (42).

20. Dispositif selon la revendication 19, **caractérisé en ce que** les bras mélangeurs (74) des premiers plans radiaux voisins, dans la direction axiale, des ouvertures d'admission (68, 70) de l'espace de mélange (45) du boîtier (42) sont plus courts que les bras mélangeurs (75) dans les seconds plans radiaux restants.

21. Dispositif selon la revendication 19 ou 20, **caractérisé en ce que** des éléments de raclage (77) en saillie par rapport à l'élément mélangeur (38) sont disposés à l'intérieur de ou entre les premiers et/ou seconds plans radiaux des bras mélangeurs (74, 75), lesquels éléments de raclage s'étendent de manière tangentielle par rapport à l'élément mélangeur (38).

22. Dispositif selon la revendication 21, **caractérisé en ce que**, à l'intérieur d'un nombre de seconds plans radiaux égal au nombre de bras mélangeurs (74) par plan radial, à chaque fois deux bras mélangeurs (74) voisins dans la direction circonférentielle sont raccordés l'un à l'autre par l'intermédiaire d'une section partielle (78, 78') s'étendant dans la direction circonférentielle, et **en ce que** ces paires de bras mélangeurs (74) reliés l'un à l'autre sont décalées dans la direction circonférentielle d'un plan radial à l'autre.

23. Dispositif selon l'une des revendications précédentes, **caractérisé en ce que** l'élément mélangeur (38) a un plus petit diamètre dans la zone raccordée aux ouvertures d'admission (68, 70) de l'espace de mélange (45) du boîtier (42) dans la direction axiale, que dans la zone restante.
